(19) Europäisches Patentamt
European Patent Office
Office européen des brevets

(11) Veröffentlichungsnummer : **0 072 436**
**B1**

(12) # EUROPÄISCHE PATENTSCHRIFT

(45) Veröffentlichungstag der Patentschrift : **01.10.86**

(21) Anmeldenummer : **82106387.2**

(22) Anmeldetag : **16.07.82**

(51) Int. Cl.⁴ : **C 01 G 49/00**, C 01 G 51/00, C 01 G 53/00, C 04 B 35/00, H 01 F 1/11

(54) **Verfahren zur Herstellung feinteiliger Ferritpulver.**

(30) Priorität : **19.08.81 DE 3132677**
**19.08.81 DE 3132680**
**19.08.81 DE 3132684**

(43) Veröffentlichungstag der Anmeldung : **23.02.83 Patentblatt 83/08**

(45) Bekanntmachung des Hinweises auf die Patenterteilung : **01.10.86 Patentblatt 86/40**

(84) Benannte Vertragsstaaten : **DE FR GB IT NL**

(56) Entgegenhaltungen :
**EP-A- 0 052 210**
**FR-A- 2 018 764**
**US-A- 3 810 973**
**US-A- 4 025 449**

(73) Patentinhaber : **BASF Aktiengesellschaft**
**Carl-Bosch-Strasse 38**
**D-6700 Ludwigshafen (DE)**

(72) Erfinder : **Hibst, Hartmut, Dr.**
**Sternstrasse 215**
**D-6700 Ludwigshafen (DE)**
Erfinder : **Kullmann, Udo, Dr.**
**Mohngasse 23**
**D-6716 Dirmstein (DE)**

**EP 0 072 436 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein Verfahren zur Herstellung von feinteiligen Ferriten der allgemeinen Formel

$$MeFe_2O_4 \qquad (I),$$

in der Me = aMn + bNi + cZn + dCo + eFe(II) bedeutet, wobei die Atommassenverhältnisse a, b, c, d und e jeweils 0 bis 1 betragen und ihre Summe gleich 1 ist,

$$M_2{}^1Me^1{}_2Fe_{12}O_{22} \qquad (II),$$

in der $M^1$ Barium, Strontium, Calcium und/oder Blei und $Me^1$ zweiwertiges Mangan, Kupfer, Eisen, Kobalt, Nickel, Zink, Magnesium und/oder äquimolare Mengen von Lithium und dreiwertigem Eisen bedeuten, oder

$$M^2(Me^2Ti)_xFe_{12-2x}O_{19} \qquad (III),$$

in der $M^2$ Barium oder Strontium, $Me^2$ Zink, Nickel und/oder Kobalt und x Werte von 0 bis 1,5 bedeuten.

Weichmagnetische Manganzinkferrit- und Nickelzinkferritpulver von Typ der Formel (I) für die Herstellung von Magnetkopfkeramik sowie für die Herstellung von Abschirmmaterialien werden üblicherweise nach dem keramischen Verfahren hergestellt. Dazu wird Manganoxid oder Nickeloxid mit Zinkoxid und Eisen(III)-Oxid in dem Verhältnis, das der chemischen Formel des späteren Ferrits entspricht, gemischt und diese Mischung einer Wärmebehandlung bei Temperaturen zwischen 1 100 und 1 200 °C unterworfen. Dabei bildet sich der weichmagnetische Spinellferrit. Die entstandenen versinterten Konglomerate aus Kristalliten werden anschließend meist unter Zusatz von Wasser zu einem Pulver, dessen Teilchengröße rund 1 µm beträgt, gemahlen. Durch das Mahlen entstehen Kristallbaufehler in den Teilchen, die eine Verschlechterung der magnetischen Eigenschaften zur Folge haben. Außerdem weisen die gemahlenen Ferritpulver ein breites Teilchengrößenspektrum auf.

Entsprechend wird bei der Weiterverarbeitung dieser Pulver zu einer weichmagnetischen Ferritkeramik i. a. ein breites Korngrößenspektrum beobachtet.

Neben dem keramischen Verfahren sind zur Herstellung von MnZn- und NiZn-Ferriten auch Mischfällungsverfahren herangezogen worden. Diese Verfahren haben den Nachteil, daß das in der flüssigen Phase erhaltene Mischfällungsprodukt zu feinteilig und daher nur sehr schwierig von der flüssigen Phase abzutrennen ist. Da hierbei außerdem feinteilige Fällungsprodukte durchs Filter laufen können, ist es schwierig, Fällungsprodukte mit einer Zusammensetzung zu erzielen, die den festgelegten Molverhältnissen der jeweiligen Komponenten entsprechen. Weiterhin ist es nachteilig, daß die erhaltenen Ferrite aufgrund der Versinterung beim Tempern schlecht dispergierbar sind und für eine weitere Verwendung aufgemahlen werden müssen.

Weiterhin ist bekannt, Ferrite vom Spinelltyp der Zusammensetzung $MeFe_2O_4$ durch Oxidation von Me-Fe(II)-Hydroxidmischfällungen aus wäßriger Lösung darzustellen. Die so hergestellten Ferrite sind aber sehr feinteilig und ergeben bei einer Verdichtung einen Preßling mit unzureichenden, vergleichsweise niedrigen Dichten.

Für die Herstellung von Magnetkeramik und von weichmagnetischen Plastoferriten ist es wünschenswert, isotrope Ferritpulver vom Spinelltyp zur Verfügung zu haben, welche sich durch eine enge Teilchengrößenverteilung, eine hohe Verdichtbarkeit und eine gute Dispergierbarkeit für die Einarbeitung in organische Bindemittel auszeichnen.

Die hexagonale $Me_2Y$-Ferritphase der Zusammensetzung $M^1{}_2Me^1{}_2Fe_{12}O_{22}$ (Formel II) mit $M^1$ = Ba, Sr, Ca, Pb und $Me^1$ = Mn(II), Cu(II), Fe(II), Co(II), Ni(II), Zn, Mg, (Li + Fe(III))/2 für die Herstellung von Magnetkeramik für die Hochfrequenztechnik wird üblicherweise auch nach dem keramischen Verfahren hergestellt. Dazu werden $M^1CO_3$, $Me^1CO_3$ oder $Me^1O$ und Eisenoxid in dem Verhältnis, das der chemischen Formel des späteren Ferrits entspricht, gemischt und diese Mischung einer Wärmebehandlung, dem Vorsintern, bei Temperaturen zwischen 1 100 und 1 300 °C unterworfen. Die entstandenen, stark versinterten Konglomerate aus plättchenförmigen Kristalliten werden anschließend meist unter Zusatz von Wasser zu einem Pulver mit einer Teilchengröße von rund 1 µm zermahlen. Durch das Mahlen werden aber die gebildeten Plättchen zu einem großen Teil zerstört und nur ein Pulver mit breiter Teilchengrößenverteilung erhalten.

Daneben sind zur Herstellung des $Me^1{}_2Y$-Ferrits auch Mischfällungsverfahren herangezogen worden. So sind in den japanischen Offenlegungsschriften 50 106899 und 50 039700 Verfahren beschrieben, bei denen die gelösten Metallkationen mit organischen Komplexbildnern in ammoniakalischer Lösung als schwerlösliche metallorganische Verbindungen ausgefällt, abfiltriert und ausgewaschen werden. Der getrocknete Niederschlag wird anschließend bei 1 100 bis 1 300 °C getempert. Von T.-O. Kim et al. ist in J. Korean. Ceram. Soc. 1979, 16 (2), 89-98, ein Verfahren beschrieben, bei dem eine $BaCl_2$-, $Zn(NO_3)_2$- und $FeCl_3$-haltige wäßrige Lösung mit einer $NaOH$-$Na_2CO_3$-Lösung gefällt, ausgewaschen, gefriergetrocknet und anschließend getempert wird. Die so erhaltenen Pulver enthalten zwar als

Hauptkomponente den gewünschten $Zn_2Y$-Ferrit, sind aber nicht phasenrein. Außerdem ist das Verfahren der Gefriertrocknung sehr teuer und unwirtschaftlich. Die genannten Mischfällungsverfahren haben außerdem den Nachteil, daß das in der flüssigen Phase erhaltene Mischfällungsprodukt feinteilig und daher nur schwierig von der flüssigen Phase abzutrennen ist. Da beim Filtrieren und anschließenden Auswaschen feinteilige Fällungsprodukte durchs Filter laufen können, ist es schwierig, Fällungsprodukte mit einer Zusammensetzung zu erzielen, die den festgelegten Molverhältnissen der jeweiligen Komponenten entsprechen. Wegen dieser Mängel wurden diese Verfahren bisher gewerblich nicht realisiert. Weiterhin ist es nachteilig, daß die erhaltenen Ferrite aufgrund der Versinterung beim Tempern für die weitere Verwendung aufgemahlen werden müssen.

Mischfällungen führen im allgemeinen zu einem innigen Kontakt der Reaktionskomponenten und bewirken so eine Reaktionsbeschleunigung. Andererseits sind auch Fluxverfahren bekannt, bei denen Flußmittel zur Förderung der Reaktion zwischen den einzelnen Metalloxiden eingesetzt werden. So können $Me^1_2Y$-Ferrite aus Natriumferritschmelzen [A. Tauber et al., J. Appl. Phys., Suppl. *33*, 1381 S (1962)] oder Bariumboratschmelzen [A. Tauber et al., J. Appl. Phys. *35* (1964) 1 008, Part 2] auskristallisiert werden. Die Verfahren erfordern jedoch Temperaturen von 1 200 °C und höher.

Für verschiedene Anwendungen der Hochfrequenztechnik ist es wünschenswert, ein $Me^1_2Y$-Pulver zur Verfügung zu haben, dessen plättchenförmige Teilchen im Magnetfeld gut ausrichtbar sind und das durch Sintern zu einer hochdichten weichmagnetischen Keramik verarbeitet werden kann. Außerdem ist es wünschenswert, ein Pulver zur Verfügung zu haben, das sich leicht in Kunststoff oder Gummi einarbeiten läßt. So hergestellte, weichmagnetische Plastoferrite können z. B. Radiowellen absorbieren und sind für Abschirmungszwecke von Interesse. Außerdem ist es wünschenswert, ein $Me^1_2Y$-Pulver zur Verfügung zu haben, das sich gut in einen Lack eindispergieren läßt, wobei eine weichmagnetische Farbe für Abschirmungszwecke erhalten wird.

Es war daher wünschenswert, ein einfaches und billiges Verfahren zur Herstellung eines hexagonalen $Me^1_2Y$-Ferritpulvers bereitzustellen, mit welchem ein Produkt erhältlich ist, das den obengenannten Anforderungen genügt. Ein solches hexagonales, weichmagnetisches Ferritpulver sollte sich durch Einphasigkeit, eine enge Teilchengrößenverteilung, eine gute Dispergierbarkeit für die Einarbeitung in organische Bindemittel und eine gute Ausrichtbarkeit in einem Magnetfeld auszeichnen.

Auch die Ferritpulver der Formel (III) für die Herstellung von Hartferritmagneten sowie von weitgehend fälschungssicheren magnetischen Aufzeichnungen werden üblicherweise nach dem keramischen Verfahren hergestellt. Dazu werden Bariumcarbonat bzw. Strontiumcarbonat und Eisenoxid in dem Verhältnis, das der chemischen Formel des späteren Ferrits entspricht, gemischt und diese Mischung einer Wärmebehandlung, dem sogenannten Vorsintern, bei Temperaturen zwischen 1 100 °C und 1 300 °C unterworfen. Beim Vorsintern bildet sich der magnetische Hexaferrit. Die entstandenen versinterten Konglomerate aus Kristalliten werden anschließend meist unter Zusatz von Wasser zu einem Pulver, dessen Teilchengröße rund 1 µm beträgt, gemahlen. Durch das Mahlen entstehen Kristallbaufehler in den Teilchen, die eine Erniedrigung der Koerzitivität zur Folge haben. So hergestellte Ferritpulver weisen im allgemeinen eine recht gute spezifische remanente Magnetisierung auf, die Magnetisierungskoerzitivfeldstärke $_JH_C$ liegt aber mit etwa 200 KA/m vor dem Mahlen und $\leqslant$ 150 KA/m nach dem Mahlen recht niedrig. Diese durch das Mahlen hervorgerufenen Kristallbaudefekte lassen sich durch ein Tempern nach dem Mahlen oder durch einen Sinterprozeß nur zum Teil ausheilen. Deshalb zeigen die aus gemahlenen hartmagnetischem Bariumferritpulver hergestellten Magnete, wie sie in der Technik heute benutzt werden, $_JH_c$-Werte von nur 280 bis 320 kA/m. Außerdem weisen die gemahlenen Ferritpulver ein breites Teilchengrößenspektrum auf.

Ein anderes Verfahren wird z. B. in der DE-A-28 32 892 beschrieben. Hier wird eine Ba-Fe(III)-Nitratlösung in einem Sprühturm gegen ein Heizgas mit einer Temperatur von 1 200 °C versprüht. An dem Verfahren ist nachteilig, daß das so hergestellte Ba-Ferritpulver mit $\alpha$-$Fe_2O_3$ verunreinigt ist, wodurch Sättigungs- und remanente Magnetisierung gegenüber einphasigem Ferrit erniedrigt sind. Zum anderen sind die anfallenden Kristallite teilweise miteinander versintert, so daß das Pulver vor einer weiteren Verwendung aufgemahlen werden muß.

Neben den obengenannten Verfahren sind zur Herstellung von Barium- und Strontiumferriten auch Mischfällungsverfahren herangezogen worden. So beschreiben K. Haneda et al in J. Amer. Ceram. Soc. *57* (8) (1974) 354/7 die Darstellung von hochkoerzitivem Bariumferrit durch Tempern einer abfiltrierten, ausgewaschenen und getrockneten $BaCO_3$-$Fe(OH)_3$-Mischfällung bei 925 °C. Die Mischfällung wurde durch Zusammengeben einer Ba-Fe(III)-Chloridlösung und einer NaOH-$Na_2CO_3$-Lösung mit fast 4-fachem Alkaliüberschuß hergestellt. Ein weiteres Mischfällungsverfahren aus Ba-Fe(III)-Chloridlösung und überschüssiger $Na_2CO_3$-Lösung wird in der DE-A-19 48 114 (US-A-3 582 266 und FR-A-2 018 764) offenbart. Das zusammen ausgefällte Ba und Fe(III)-Carbonat wird filtriert, ausgewaschen, sprühgetrocknet und bei 1 100 °C getempert. Der Überschuß an $Na_2CO_3$ dient dazu, um nach der Filtration eine wirksame Entfernung von Salzanteilen zu ermöglichen. Die erforderlichen hohen Temperaturen bei der Temperung ergeben jedoch grobteilige Ferritpulver mit einer Teilchengröße von 0,5 bis 1,0 µm und $H_c$-Werten, die auch mit dem keramischen Verfahren erreicht werden können. Ein weiteres Mischfällungsverfahren ist aus der GB-A-1 254 390 (US-A-3 634 254) bekannt. Dabei werden die Kationen einer ammoniakalischen Ba-Fe(III)-Nitratlösung mit einem Ammoniumsalz einer Fettsäure ausgefällt. Auch hier ist eine Temperung mit den dadurch bedingten nachteiligen Folgen auf das Teilchengrößenspektrum erforderlich.

Diese genannten Verfahren haben den Nachteil, daß das in der flüssigen Phase erhaltene Mischfällungsprodukt zu feinteilig und daher nur sehr schwierig von der flüssigen Phase abzutrennen ist. Da hierbei außerdem das gefällte feinteilige Ba-Salz teilweise durchs Filter läuft, ist es schwierig, Fällungsprodukte mit einer Zusammensetzung zu erzielen, die den festgelegten Molverhältnissen der jeweiligen Komponenten entsprechen. Wegen dieser Mängel wurden diese Verfahren bisher gewerblich nicht realisiert. Weiterhin ist es nachteilig, daß die erhaltenen Ferrite aufgrund der Versinterung beim Tempern schlecht dispergierbar sind und für eine weitere Verwendung aufgemahlen werden müssen.

Um den Nachteil der schlechten Filtrierbarkeit zu beheben, wird in der DE-B-27 38 830 (US-A-4 120 807) vorgeschlagen, bei der Mischfällung ein grobteiliges $Fe_3O_4$ und $BaCO_3$ mit einer Teilchengröße von 0,5 bis 0,7 µm zu erzeugen. Der nach dem Tempern bei 400 bis 900 °C entstehende Ba-Ferrit ist allerdings mit einem Kristallitdurchmesser von 0,5 bis 0,9 µm relativ grobteilig und fällt z. T. in versinterter Form an.

Mischfällungen führen im allgemeinen zu einem innigen Kontakt der Reaktionskomponenten und bewirken so eine Reaktionsbeschleunigung. Andererseits sind auch Fluxverfahren bekannt, bei denen Flußmittel zur Förderung der Reaktion zwischen den einzelnen Metalloxiden eingesetzt werden, wie z. B. $B_2O_3$, Alkaliborate, PbO, Alkaliferrite, $Bi_2O_3$, Molybdate, Alkalihalogenide und -sulfate.

So wird nach der US-A-3 793 443 Bariumferrit durch Erhitzen eines $BaCO_3$-FeOOH-NaCl-KCl-Gemenges dargestellt. Dabei wird es als wichtig angesehen, von FeOOH als Eisenkomponente auszugehen, um die Ferritbildungsreaktion in Gegenwart von *in situ* erzeugtem $H_2O$ durchzuführen. Außerdem wird eine vollständige Ferritbildung nur bei hohen Temperaturen, weit oberhalb des Schmelzpunktes der zugegebenen Alkalichloride (d. h. bei 1 000 °C) beobachtet. Tiefere Temperaturen führen zu geringen Ba-Ferritausbeuten. Das Verfahren bringt gegenüber der keramischen Methode keine Verbesserung in der Koerzitivkraft. Außerdem fallen die Teilchen mit einem Kristallitdurchmesser von ca. 1 bis 1,5 µm in relativ grobteiliger Form an. Nach dem Verfahren der DE-A-24 01 029 (US-A-3 810 973) wird eine Suspension von Eisen(III)-oxidhydrat in einer Alkalichloridlösung mit $BaCO_3$-Pulver versetzt und dann sprühgetrocknet und bei 1 000 bis 1 050 °C getempert. Das Verfahren führt zu einem relativ grobteiligen hexagonalen Ferrit mit einem Kristalldurchmesser von ca. 1 bis 1,5 µm. In der DE-A-21 43 793 wird ein Verfahren zur Herstellung von Bariumferrit beschrieben, bei dem ein $BaCO_3$-$Fe_2O_3$-$Na_2SO_4$-$K_2SO_4$-Gemenge auf 950 °C erhitzt wird. Auch dieses Verfahren ergibt grobteilige Ferritpräparate.

Für eine Reihe von Anwendungen auf dem Gebiet der fälschungssicheren Codierung, z. B. bei Identitätsausweisen, Kreditkarten sowie magnetische Speicherung von sonstigen Kennungen, ist es wünschenswert, magnetische Aufzeichnungsträger zur Verfügung zu haben, welche eine gegenüber den derzeitigen Standardspeichermedien höhere Koerzitivfeldstärke aufweisen. Entsprechende Materialien wären gegenüber magnetischen Fremdfelder unempfindlicher und somit nur unter erschwerten Bedingungen zu fälschen.

Aufgabe der Erfindung war es daher, ein einfaches und wirtschaftliches Verfahren zur Herstellung der angegebenen Ferrite bereitzustellen, mit dem die jeweiligen Anforderungen an die resultierenden Ferrite erfüllt werden können. Die nach dem anzugebenen Verfahren erhältlichen Ferrite sollten sich vor allem durch eine hohe Feinteiligkeit bei enger Teilchengrößenverteilung und durch eine gute Dispergierbarkeit für die Einarbeitung in organische Bindemittel auszeichnen. Darüber hinaus sollten die hartmagnetischen Ferrite eine hohe und in einfacher Weise definiert einstellbare Koerzitivfeldstärke aufweisen.

Es wurde nun überraschenderweise gefunden, daß sich die feinteiligen Ferrite der allgemeinen Formel

$$MeFe_2O_4 \qquad (I),$$

in der Me = aMn + bNi + cZn + dCo + eFe(II) bedeutet, wobei die Atommassenverhältnisse a, b, c, d und e jeweils 0 bis 1 betragen und ihre Summe gleich 1 ist,

$$M^1_2Me^1_2Fe_{12}O_{22} \qquad (II),$$

in der $M^1$ Barium, Strontium, Calcium und/oder Blei und $Me^1$ zweiwertiges Mangan, Kupfer, Eisen, Kobalt, Nickel, Zink, Magnesium und/oder äquimolare Mengen von Lithium und dreiwertigem Eisen bedeuten, oder

$$M^2(Me^2Ti)_xFe_{12-2x}O_{19} \qquad (III),$$

in der $M^2$ Barium oder Strontium, $Me^2$ Zink, Nickel und/oder Kobalt und x Werte von 0 bis 1,5 bedeuten, entsprechend den gestellten Anforderungen herstellen lassen, wenn die für die jeweilige, den Formeln (I), (II) oder (III) entsprechende Zusammensetzung erforderlichen Me, $Me^1$, $Me^2$, $M^1$ und/oder $M^2$-Salze sowie gegebenenfalls unter Zugabe von Titantetrachlorid als wäßrige Lösungen und eine wäßrige Eisen(III) chloridlösung mit einer wäßrigen Lösung von Natrium- und/oder Kaliumcarbonat umgesetzt, die resultierende Gemenge zur Trockne gebracht, das trockene Salzgemenge anschließend auf eine

Temperatur zwischen 800 und 1 200 °C erhitzt und der sich dabei bildende feinteilige Ferrit der vorgegebenen Zusammensetzung durch Auslaugen mit Wasser isoliert wird.

Insbesondere lassen sich mit dem erfindungsgemäßen Verfahren isotrope Ferritpulver mit Spinellstruktur der allgemeinen Formel (I) $MeFe_2O_4$, in der Me = aMn + bNi + cZn + dCo + eFe(II) bedeutet, wobei die Atommassenverhältnisse a, b, c, d und e jeweils 0 bis 1 betragen und ihre Summe gleich 1 ist, mit den aufgabengemäß geforderten Eigenschaften herstellen, wenn eine wäßrige Lösung oder Suspension eines oder mehrerer der Me-Salze und eine wäßrige Eisen(III)-Chloridlösung mit einer wäßrigen Lösung von Natriumcarbonat und/oder Kaliumcarbonat umgesetzt, die resultierende Mischung, bestehend aus schwerlöslichem $MeCO_3$ und Eisen(III)-Carbonat in einer Lösung von Natriumchlorid und/oder Kaliumchlorid zur Trockene gebracht wird, das trockene Salzgemenge anschließend auf eine Temperatur oberhalb des Schmelzpunkts von Natriumchlorid und/oder Kaliumchlorid, jedoch auf nicht mehr als 1 200 °C erhitzt und der sich dabei bildende oktaederförmige Ferrit der Zusammensetzung $MeFe_2O_4$ durch Auslaugen mit Wasser isoliert wird.

Bei der Ausarbeitung des erfindungsgemäßen Verfahrens hat es sich als zweckmäßig erwiesen, das oder die jeweiligen Me-Salze in Form der Chloride oder Carbonate einzusetzen. Dabei wird das Atommassenverhältnis von Eisen(III) zu Me-Kation in den eingesetzten Salzen bereits entsprechend der vorgegebenen Formel eingesetzt. Weiterhin ist es vorteilhaft, wenn in der Mischfällung das Atommassenverhältnis von (Na + K) zu Cl 0,9 bis 1,4 beträgt. Nach Herstellung der Me- und Eisen(III) carbonat-Fällung in der Alkalichloridlösung wird diese zur Trockene gebracht, was üblicherweise durch Sprühtrocknung geschieht. Das dabei sich ergebende Salzgemenge wird nun 0,5 bis 3 Stunden lang auf eine Temperatur oberhalb des Schmelzpunktes des Alkalichlorids, jedoch auf nicht mehr als 1 200 °C erhitzt. Diese Temperaturbehandlung kann sowohl in Luft als auch in Inertgasatmosphäre durchgeführt werden. Nach dem Abkühlen wird der Schmelzkuchen mit Wasser behandelt, so daß sich der Alkalichloridanteil herauslöst und das Ferritpulver zurückbleibt.

Nach dem erfindungsgemäßen Verfahren erhält man ein unversintertes lockeres Ferritpulver. Die Präparate bestehen aus isotropen oktaederförmigen Kristalliten mit gut und regelmäßig ausgeprägtem Kristallhabitus und enger Teilchengrößenverteilung. Der Oktaederdurchmesser der Pulverteilchen kann durch die angewendete Reaktionstemperatur auf Werte zwischen 0,1 und 2,0 µm eingestellt werden, die spezifische Oberfläche nach BET variiert entsprechend zwischen 10 und 0,5 $m^2/g$.

Das Verfahren zeichnet sich gegenüber den bekannten Mischfällungsverfahren zur Gewinnung von kubischen Ferriten mit Spinellstruktur durch eine Reihe von verfahrenstechnischen Vereinfachungen aus. So entfällt das langwierige Abfiltrieren der Mischfällungsprodukte und das vorgegebene Fe/Me-Verhältnis bleibt unverändert, da keine Komponente durchs Filter laufen kann. Außerdem entfällt das langwierige Auswaschen der Mischfällungsprodukte. Durch die Anwesenheit des Alkalichlorids beim Tempern wird ein Versintern der kubischen Ferritoktaeder verhindert, so daß die erhaltenen Pulver für eine Weiterverarbeitung nicht erst aufgemahlen werden müssen, wodurch Kristallfehler und ein breites Teilchengrößenspektrum eingeführt würden. Im Gegensatz zu den Produkten aus dem keramischen Verfahren oder dem Mischfällungsverfahren sind die nach dem erfindungsgemäßen Verfahren erhaltenen Spinellpulver aus regelmäßigen oktaederförmigen Kristalliten mit scharf ausgeprägtem Kristallhabitus zusammengesetzt. Dabei ist die Größe der isotropen Teilchen durch die angewendete Reaktionstemperatur in einem weiten Bereich einstellbar, wobei die Teilchengröße bemerkenswert einheitlich ausfällt.

Die genannten besonderen Teilcheneigenschaften haben eine gute Dispergierbarkeit in organische Medien zur Herstellung von weichmagnetischen Farben oder Plastoferriten z. B. für Abschirmzwecke zur Folge. Des weiteren zeichnen sich die nach dem erfindungsgemäßen Verfahren erhaltenen Pulver durch eine gute Verdichtungscharakteristik beim biaxialen oder isostatischen Verdichten aus. Nach Sintern und biaxialem oder isostatischem Heißpressen dieser Preßlinge wird eine Keramik für die Herstellung von Magnetferritköpfen mit einem einheitlichen Korngrößenspektrum erhalten, wobei gegenüber herkömmlicher Ferritkeramik verbesserte mechanische und magnetische Eigenschaften resultieren.

Ebenso lassen sich mit dem erfindungsgemäßen Verfahren die feinteiligen hexagonalen $Me^1{}_2Y$-Ferrit der allgemeinen Formel $M^1{}_2Me^1{}_2Fe_{12}O_{22}$, in der $M^1$ Barium, Strontium, Calcium und/oder Blei und $Me^1$ zweiwertiges Mangan, Kupfer, Eisen, Kobalt, Nickel, Zink, Magnesium und/oder äquimolare Mengen von Lithium und dreiwertigem Eisen bedeuten, aus einer Natrium- und/oder Kaliumsalzschmelze herstellen, wenn hierzu eine wäßrige Lösung oder Suspension eines $M^1$-Salzes, eine wäßrige Lösung oder Suspension eines $Me^1$-Salzes und eine wäßrige Lösung eines Eisen(III)-Salzes mit einer wäßrigen Natriumcarbonat-Lösung umsetzt, die resultierende Mischung, bestehend aus schwerlöslichem $M^1$-Salz, $M^1$-Salz und Eisen(III)-Carbonat, in einer Natriumsalzlösung zur Trocknung gebracht, das trockene Salzgemenge anschließend auf eine Temperatur zwischen 800 °C und 1 050 °C erhitzt und der sich dabei bildende plättchenförmige $Me^1{}_2Y$-Ferrit dann aus dem $Me^1{}_2Y$-Ferrit/Natriumsalzgemenge durch Auslaugen mit Wasser isoliert.

Bei der Ausarbeitung des erfindungsgemäßen Verfahrens hat es sich als zweckmäßig herausgestellt, die einzelnen Komponenten für das Reaktionsgemenge so auszuwählen, daß die Ferritbildung entweder in einer Natriumchlorid- oder einer Natriumsulfat-Schmelze stattfindet.

Für den Fall, daß die Ferritbildung in Gegenwart von Natriumchlorid erfolgt, wird eine wäßrige Lösung von $M^1Cl_2$ oder eine Suspension von $M^1CO_3$ in Wasser, eine wäßrige Lösung von $Me^1Cl_2$ oder

eine Suspension von $Me^1CO_3$ in Wasser und eine wäßrige Lösung von $FeCl_3$ mit einer wäßrigen $Na_2CO_3$-Lösung umgesetzt, die resultierende Mischung, bestehend aus schwerlöslichem $M^1$-, $Me^1$-, und Fe(III)-Carbonat in einer Natriumchloridlösung durch vorzugsweise Sprühtrocknung zur Trockene gebracht, das trockene NaCl-haltige Salzgemenge anschließend 0,5 bis 3 Stunden lang auf eine Temperatur zwischen 800 und 1 050 °C erhitzt und der sich dabei bildende plättchenförmige $Me^1_2$Y-Ferrit dann aus dem $Me^1_2$Y-Ferrit/NaCl-Gemenge durch Auslaugen mit Wasser isoliert. Dabei hat es sich als zweckmäßig erwiesen, bei der Mischfällung folgende Molmassenverhältnisse einzustellen : $Fe/M^1 = 5$ bis 6, $Fe/Me^1 = 5$ bis 6 und $Na/Cl = 0{,}9$ bis 1,4.

Die Herstellung von $Me^1_2$Y-Ferrit in Gegenwart von $Na_2SO_4$ unterscheidet sich dadurch, daß eine wäßrige Suspension von $M^1SO_4$ oder $M^1CO_3$ in Wasser, eine wäßrige Lösung von $Me^1SO_4$ oder eine Suspension von $Me^1CO_3$ in Wasser und eine wäßrige Lösung von $Fe_2(SO_4)_3$ mit einer wäßrigen $Na_2CO_3$-Lösung umgesetzt, die resultierende Mischung, bestehend aus schwerlöslichen $M^1$-, $Me^1$- und Fe(III)-Salzen in einer Natriumsulfatlösung vorzugsweise durch Sprühtrocknung zur Trockene gebracht, das trockene $Na_2SO_4$-haltige Salzgemenge anschließend 0,5 bis 3 Stunden lang auf eine Temperatur zwischen 800 und 1 050 °C erhitzt und der sich dabei bildende plättchenförmige $Me^1_2$Y-Ferrit dann aus dem $Me^1_2$Y-Ferrit/$Na_2SO_4$-Gemenge durch Auslaugen mit Wasser isoliert wird. Es hat sich als zweckmäßig erwiesen, bei der Mischfällung folgende Molmassenverhältnisse einzustellen : $Fe/M = 5$ bis 6, $Fe/Me = 5$ bis 6 und $Na/SO_4 = 1{,}8$ bis 2,8.

Nach dem erfindungsgemäßen Verfahren lassen sich $Me^1_2$Y-Ferrite unmittelbar als feinteilige unversinterte Pulver gewinnen, die für eine weitere Verarbeitung nicht mehr aufgemahlen werden müssen. Sie bestehen aus sechseckigen Plättchen mit einem Durchmesser von etwa 1 bis 3 µm. Die bei etwa 900 °C erhaltenen Plättchen sind mit einem Durchmesser/Dicke-Verhältnis von ca. 30 extrem dünn. Mit steigender Temperatur tritt ein deutliches Plättchendickenwachstum auf, so daß bei einer Darstellungstemperatur von 1 050 °C Plättchen mit einem Durchmesser/Dicke-Quotienten von ca. 10 anfallen. Die Werte für die spezifische Oberfläche nach BET liegen zwischen 1 bis 10 $m^2/g$. Das $Zn_2$Y-Ferritpulver mit der Zusammensetzung $Ba_2Zn_2Fe_{12}O_{22}$ fällt bei 950 °C röntgenografisch (Guiniertechnik) einphasig mit einem $H_c$-Wert kleiner 2 kA/m an. Bei höherer Darstellungstemperatur liegt der $H_c$-Wert unter 1 kA/m, die Stättigungsmagnetisierung beträgt 35 $nTm^3/g$. Die Messungen erfolgten in einem Magnetfeld von 160 kA/m.

Die nach dem erfindungsgemäßen Verfahren erhaltenen freifließenden unversinterten plättchenförmigen Ferritpulver besitzen eine besonders gute Dispergierbarkeit, so daß sie besonders zur Herstellung von magnetischen Farben und Plastoferriten geeignet sind. Beim bi- oder uniaxialen trockenen oder nassen Verpressen der Magnetpulver zur Darstellung von weichmagnetischer Keramik für Hochfrequenzanwendungen tritt — insbesondere in Gegenwart eines Magnetfeldes — aufgrund des extrem plättchenförmigen Habitus der $Me^1_2$Y-Teilchen eine erwünschte hohe Ausrichtung der Plättchen senkrecht zur Preßrichtung auf.

In der gleichen vorteilhaften Weise lassen sich mit dem erfindungsgemäßen Verfahren die hexagonalen Ferrite der allgemeinen Formel (III) $M^2(Me^2Ti)_xFe_{12-2x}O_{19}$, in der $M^2$ Barium oder Strontium, $Me^2$ Zink, Nickel und/oder Kobalt und x Werte von 0 bis 1,5 bedeuten, mit den aufgabengemäß geforderten Eigenschaften herstellen, wenn eine wäßrige Barium- oder Strontiumchlorid-Lösung und eine wäßrige Eisen(III)chlorid-Lösung sowie gegebenenfalls eine wäßrige $Me^2$-chlorid-Lösung unter Zugabe von gegebenenfalls Titantetrachlorid mit einer wäßrigen Natriumcarbonatlösung umgesetzt, die resultierende Mischung aus schwerlöslichen Fällungsprodukten in einer Natriumchloridlösung zur Trockene gebracht, das trockene Salzgemenge anschließend auf eine Temperatur oberhalb des Schmelzpunktes des Natriumchlorids jedoch auf nicht mehr als 950 °C erhitzt und dann der sich dabei bildende feinteilige plättchenförmige hexagonale Ferrit der genannten Zusammensetzung durch Auslaugen mit Wasser isoliert wird.

Zur Durchführung des erfindungsgemäßen Verfahrens wird eine wäßrige Eisen(III)chlorid-Lösung zusammen mit einer wäßrigen Lösung des $M^2Cl_2$ und gegebenenfalls des $Me^2Cl_2$ unter Rühren in eine wäßrige Natriumcarbonatlösung eingebracht, welche vorteilhafterweise ebensoviel Äquivalente Natriumione enthält wie die Summe der während des Verfahrens der Reaktionsmischung zugegebenen Chloridionen entspricht. Danach wird gegebenenfalls in die Reaktionsmischung unter weiterem Rühren eine der eingesetzten $Me^2Cl_2$-Menge äquimolare Menge an flüssigem $TiCl_4$ gleichmäßig eingetropft. Dabei ist durch geeignete apparative Vorrichtungen zu gewährleisten, daß sich das $TiCl_4$ nicht teilweise verflüchtigt. Anschließend wird zur erhaltenen Mischfällung solange eine 10 %ige Natriumcarbonatlösung zugegeben bis die Aufschlämmung eine pH-Wert zwischen 5,0 und 6,5 aufweist. Diese Aufschlämmung wird nun zur Trockene gebracht, was üblicherweise durch Sprühtrocknung geschieht. Das daraus resultierende Salzgemenge wird nun auf eine Temperatur oberhalb des Schmelzpunkts des in dem Salzgemenge vorhandenen Natriumchlorid jedoch auf nicht mehr als 950 °C erhitzt. Diese Temperatur wird 0,5 bis 3 Stunden lang beibehalten. Nach dem Abkühlen wird der erhaltene Schmelzkuchen mit Wasser behandelt, so daß sich der Natriumchloridanteil auflöst und ein braunes bis schwarzes feinteiliges Material zurückbleibt, das abfiltriert und mit Wasser gewaschen wird. Dieses Material gehört zur Gruppe der hexagenalen Ferrite und läßt sich mit der bereits angegebenen allgemeinen Formel beschreiben.

Aufgrund des erfindungsgemäßen Verfahrens lassen sich diese Ferrite unmittelbar als feinkörnige,

unversinterte Pulver gewinnen. Sie bestehen aus sehr kleinen Plättchen mit einem regelmäßigen sechseckigen Kristallhabitus. Die Teilchengrößenverteilung der anfallenden Ferrite ist sehr eng, wobei der Plättchendurchmesser zwischen 0,05 bis 0,2 µm und die spezifische Oberfläche der Teilchen zwischen 8 und 15 $m^2/g$ beträgt. Hinsichtlich der magnetsichen Eigenschaften zeichnen sich die erfindungsgemäß hergestellten Ferrite je nach gewählter Zusammensetzung durch Koerzitivfeldstärken (Hc) bis 530 kA/m und spezifische remanente Magnetisierungen bis 41 $nTm^3/g$ aus. Besonders vorteilhaft ist die enge Schaltfeldstärkenverteilung der gemäß der Erfindung erhältlichen hexagonalen Ferrite. Der die Schaltfeldstärkenverteilung charakterisierende $h_{25}$-Wert wird jeweils aus der Gleichfeldentmagnetisierungskurve (Remanenzkurve) eines Pulvers oder eines Magnetbandes abgeleitet. Nach magnetischer Sättigung der Probe werden diejenigen Magnetfeldstärken in Gegenrichtung bestimmt, bei denen nach Anlegen und Abschalten des Feldes 25, 50 und 75 % der Magnetteilchen umgeschaltet haben. Bezeichnet man diese Feldstärken jeweils mit $H_{25}$, $H_{50}$ und $H_{75}$, so ist

$$h_{25} = \frac{H_{75} - H_{25}}{H_{50}}.$$

Eine enge Schaltfeldstärkenverteilung drückt sich in einem niedrigen $h_{25}$-Wert aus. Er liegt für die erfindungsgemäß hergestellten Ferrite mit maximalem $H_c$-Wert bei 0,15 und ist somit im Vergleich zum Stand der Technik extrem niedrig. Mit zunehmender Dotierung x nimmt die Koerzitivfeldstärke und teilweise auch die Remanenzmagnetisierung ab, wobei gleichzeitig die Schaltfeldverteilung ($h_{25}$) zunimmt.

Es ist bemerkenswert, daß dennoch die $h_{25}$-Werte der nach dem erfindungsgemäßen Verfahren hergestellten dotierten hexagonalen Ferrite gegenüber nach anderen Verfahren hergestellten Ferritpulvern bei gleichem $H_c$-Wert in vorteilhafter Weise deutlich erniedrigt sind.

Die angegebenen magnetischen Eigenschaften wurden jeweils nach einer Impulsvormagnetisierung ($H_{max}$ = 7 000 kA/m) in einem Meßfeld von 800 kA/m bestimmt.

Des weiteren zeichnet sich das erfindungsgemäße Verfahren gegenüber den bekannten Mischfällungs- oder Fluxverfahren durch eine Reihe von verfahrenstechnischen Vereinfachungen aus. So entfällt das langwierige Abfiltrieren und Auswaschen der Mischfällungsprodukte und das vorgegebene Verhältnis der Metallionen bleibt unverändert, da keine Komponente durchs Filter laufen kann. Im Gegensatz zu den bekannten Mischfällungs- und Flux-Verfahren wird die Mischfällung im erfindungsgemäßen Verfahren auf einen sauren pH-Wert von 5,0-6,5 eingestellt und so weiterverarbeitet, wodurch Alkali eingespart wird.

Als ein weiterer Vorteil muß bei dem erfindungsgemäßen Verfahren die Temperatur bei Temperaturen zwischen 800 und 950 °C angesehen werden. Eine Temperung von Natriumchlorid-Ferrit-Gemengen bei diesem Temperaturen ist vorteilhaft, da die Flüchtigkeit des anwesenden Kochsalzes noch vergleichsweise gering ist und damit nur eine geringere Abgasverunreinigung auftritt. Außerdem muß bei Temperaturen oberhalb 1 000 °C mit einem Angriff von Kochsalz auf die Reaktionsgefäße gerechnet werden.

Durch die Anwesenheit des Kochsalzes beim Tempern wird ein Versintern der hexagonalen Ferritplättchen verhindert, so daß die erhaltenen Pulver für eine Weiterverarbeitung nicht erst aufgemahlen werden müssen, wodurch Kristallfehler entstehen, die Koerzitivfeldstärke und Schaltfeldverteilung verschlechtern.

Die genannten besonderen Teilcheneigenschaften haben die bereits angegeben guten magnetischen Eigenschaften zur Folge und kommen auch im Hinblick auf ein verbessertes Dispergierverhalten zum Ausdruck. Wegen dieser guten Dispergierbarkeit sind die erfindungsgemäß hergestellten Ferrite besonders für die Verwendung als magnetisches Material bei der Herstellung von magnetischen Aufzeichnungsträgern geeignet. Dabei zeigt das Ferritpulver, verglichen mit den herkömmlichen Produkten, verbesserte magnetische Eigenschaften. Außerdem sind die erfindungsgemäß hergestellten Ferritpulver so feinteilig, daß die daraus hergestellten Magnetschichten auch bei geringen Schichtdicken eine hervorragende Oberflächengüte aufweisen. Bei der Verarbeitung zu magnetischen Aufzeichnungsträgern bleibt die hohe Koerzitivfeldstärke der Magnetpulver erhalten, so daß sehr hochkoerzitive magnetische Auszeichnungsträger mit $H_C$-Werten bis zu 530 kA/m hergestellt werden können. Aufgrund der hohen $H_C$-Werte ist es schwierig, eine einmal vorgenommene magnetische Aufzeichnung wieder zu verändern. Damit sind die magnetischen Aufzeichnungen gegen Fremdfelder weitgehend unempfindlich und stabil und in gewissem Umfang auch fälschungssicher.

Die Erfindung sei anhand folgender Beispiele näher erläutert:

### Beispiel 1

Es wird eine Lösung, bestehend aus 272,6 g $ZnCl_2$, 554,2 g $MnCl_2 \cdot 4\ H_2O$ und 2 811,1 g $FeCl_3 \cdot 6\ H_2O$ in 20 l $H_2O$ hergestellt und unter Rühren in eine Lösung von 2 162,2 g $Na_2CO_3$ in 8 l $H_2O$ gegeben. Danach wird die erhaltene Suspension sprühgetrocknet. Ein Teil des sprühgetrockneten Pulvers wird anschließend eine Stunde lang in einem vorgewärmten Kammerofen bei 1 060 °C an Luft getempert. Nach dem Abkühlen wird das erhaltene Mangan-Zinkferrit/NaCl-Gemenge unter Rühren in kaltes Wasser

gegeben, wobei sich der NaCl-Anteil des Gemenges auflöst. Anschließend wird das erhaltene Ferritpulver abfiltriert, ausgewaschen und getrocknet. Das im Röntgendiagramm einphasige Manganzinkferrit-Präparat besteht aus oktaederförmigen Kristalliten mit einem Teilchendurchmesser von 0,6 µm. Die Magnetwerte betragen : $H_c = 0{,}7$ kA/m, $M_r/\rho = 2{,}8$ nTm³/g, $M_s/\rho = 63$ nTm³/g. Die magnetische Messung erfolgte in einem Magnetfeld mit $H_m = 160$ kA/m.

Beispiel 2

Ein weiterer Teil des sprühgetrockneten Pulvers aus Beispiel 1 wird eine Stunde lang in einem vorgewärmten Kammerofen bei 1 050 °C unter Argon getempert. Nach dem Abkühlen wird das erhaltene Ferrit/Salz-Gemenge, wie in Beispiel 1 beschrieben, aufgearbeitet. Man erhält ein im Röntgendiagramm einphasiges MnZn-Ferrit-Präparat mit einer Teilchengröße von 0,3 µm. Die Magnetwerte betragen : $H_c = 1{,}2$ kA/m, $M_r/\rho = 4{,}7$ nTm³/g, $M_s/\rho = 64$ nTm³/g. Die magnetische Messung erfolgte in einem Magnetfeld mit $H_m = 160$ kA/m.

Beispiel 3

Es wird eine Lösung, bestehend aus 1 050,4 g $BaCl_2 \cdot 2H_2O$, 586,0 g $ZnCl_2$ und 6 487,2 g $FeCl_3 \cdot 6\ H_2O$ in 45 l $H_2O$ hergestellt und unter Rühren in eine Lösung von 4 727,2 g $Na_2CO_3$ in 15 l $H_2O$ gegeben. Danach wird die erhaltene Suspension sprühgetrocknet. Ein Teil des sprühgetrockneten Pulvers wird anschließend eine Stunde lang in einem vorgewärmten Kammerofen bei 950 °C an Luft getempert. Nach dem Abkühlen wird das erhaltene $Ba_2Zn_2Fe_{12}O_{22}$/NaCl-Gemenge unter Rühren in kaltes Wasser gegeben, wobei sich der NaCl-Anteil des Gemenges auflöst. Anschließend wird der Ferrit abfiltriert, ausgewaschen und getrocknet. Das im Röntgendiagramm einphasige $Ba_2Zn_2Fe_{12}O_{22}$-Präparat besteht aus sehr dünnen Kristallplättchen mit einem Plättchendurchmesser von 1 bis 3 µm. Die Magnetwerte (in einem Magnetfeld von 160 kA/m) betragen : $H_c = 1{,}7$ kA/m, $M_s/\rho = 34$ nTm³/g, $M_r/\rho = 8$ nTm³/g.

Beispiel 4

Ein Teil des sprühgetrockneten Pulvers aus Beispiel 3 wird eine Stunde lang in einem vorgewärmten Kammerofen bei 1 050 °C an Luft getempert. Das erhaltene $Zn_2Y$/NaCl-Gemenge wird, wie in Beispiel 3 beschrieben, weiterverarbeitet. Man erhält ein einphasiges $Ba_2Zn_2Fe_{12}O_{22}$-Präparat mit Kristallplättchen von 1 bis 3 µm. Die Magnetwerte (in einem Magnetfeld von 160 kA/m) betragen : $H_c = 0{,}7$ kA/m, $M_s/\rho = 35$ nTm³/g, $M_r/\rho = 2$ nTm³/g.

Beispiel 5

Es wird eine Lösung, bestehend aus 139,6 g $BaCl_2 \cdot 2H_2O$ und 1 776,4 g $FeCl_3 \cdot 6H_2O$ in 8 l $H_2O$ hergestellt und unter Rühren in eine Lösung von 1 105,5 g $Na_2CO_3$ in 11 l $H_2O$ gegeben. Der pH-Wert der Mischung beträgt 5,5. Danach wird die erhaltene Suspension sprühgetrocknet. Das sprühgetrocknete Pulver wird anschließend eine Stunde lang in einem vorgewärmten Kammerofen bei 850 °C an Luft getempert. Nach dem Abkühlen wird das erhaltene $BaFe_{12}O_{19}$/NaCl-Gemenge unter Rühren in kaltes Wasser gegeben, wobei sich der NaCl-Anteil des Gemenges auflöst. Anschließend wird der braune Ferrit abfiltriert, ausgewaschen und getrocknet. Das im Röntgendiagramm einphasige $BaFe_{12}O_{19}$-Präparat besteht aus Kristallplättchen mit engem Teilchengrößenspektrum und einem Plättchendurchmesser von 0,1 bis 0,2 µm und einer spezifischen Oberfläche von 11,6 m²/g. Die Magnetwerte (in einem Magnetfeld von 800 kA/m) betragen : $H_c = 450$ kA/m, $M_r/\rho = 41$ nTm³/g. Die Schaltfeldverteilung $h_{25} = 0{,}18$.

Vergleichsbeispiel 1

Es wird eine Lösung, bestehend aus 139,6 g $BaCl_2 \cdot 2\ H_2O$ und 1 776,4 g $FeCl_3 \cdot 6\ H_2O$ in 8 l Wasser hergestellt und unter Rühren in eine Lösung von 1 105,5 g $Na_2CO_3$ in 11 l Wasser gegeben. Der pH-Wert der Mischung beträgt 5,5. Danach wird die erhaltene Suspension sprühgetrocknet. Das sprühgetrocknete Pulver wird anschließend eine Stunde lang in einem vorgewärmten Kammerofen bei 750 °C an Luft getempert. Nach dem Abkühlen liegt ein $BaFe_{12}O_{19}$/NaCl-Gemenge vor, das unter Rühren in kaltes Wasser gegeben wird, wobei sich der NaCl-Anteil des Gemenges auflöst. Anschließend wird der braune Ferrit abfiltriert, ausgewaschen und getrocknet. Das im Röntgendiagramm einphasige $BaFe_{12}O_{19}$-Präparat besteht aus Kristallplättchen mit engem Teilchengrößenspektrum und einem Plättchendurchmesser von 0,1 bis 0,2 µm und einer spezifischen Oberfläche von 12,8 m²/g. Die Magnetwerte betragen : $H_c = 417$ kA/m, $M_r/\rho = 38$ nTm³/g. Der $h_{25}$-Wert beträgt 0,21.

Beispiel 6

Es wird eine Lösung, bestehend aus 266,6 g $SrCl_2 \cdot 6H_2O$ und 3 189,5 g $FeCl_3 \cdot 6H_2O$ in 18 l $H_2O$ hergestellt und unter Rühren in eine Lösung von 1 982,0 g $Na_2CO_3$ in 7 l Wasser gegeben. Der pH-Wert

der Mischung beträgt 5,8. Danach wird die erhaltene Suspension sprühgetrocknet. Das sprühgetrocknete Pulver wird anschließend eine Stunde lang in einem vorgewärmten Kammerofen bei 850 °C an Luft getempert. Nach dem Abkühlen wird das erhaltene $SrFe_{12}O_{18}$/NaCl-Gemenge unter Rühren in kaltes Wasser gegeben, wobei sich der NaCl-Anteil des Gemenges auflöst. Anschließend wird der braune Ferrit abfiltriert, ausgewaschen und getrocknet. Das im Röntgendiagramm einphasige $SrFe_{12}O_{19}$-Präparat besteht aus Kristallplättchen mit engem Teilchengrößenspektrum und einem Plättchendurchmesser von 0,1 bis 0,2 μm und einer spezifischen Oberfläche von 13,2 m²/g. Die Magnetwerte (in einem Magnetfeld von 800 kA/m) betragen : $H_c$ = 532 kA/m, $H_R$ = 605 kA/m, $M_r/\rho$ = 41 nTm³/g. Die Schaltfeldverteilung $H_{25}$ = 0,16.

Beispiel 7

Es wird eine Lösung, bestehend aus 1 037,5 g $BaCl_2 \cdot 2H_2O$, 260,5 g $ZnCl_2$ und 12 627,6 g $FeCl_3 \cdot 6H_2O$ in 20 l Wasser hergestellt und unter Rühren in eine Lösung von 8 521,2 g $Na_2CO_3$ in 20 l $H_2O$ gegeben. Anschließend werden tropfenweise unter weiterem Rühren 394,8 g $TiCl_4$ zugegeben. Der pH-Wert der erhaltenen Suspension beträgt 5,6. Anschließend wird die Mischfällung durch Zugabe von 10 %iger $Na_2CO_3$-Lösung auf einen pH-Wert von 6,0 eingestellt, wozu etwa 1,6 l nötig sind. Danach wird die erhaltene Suspension sprühgetrocknet. Das sprühgetrocknete Pulver wird anschließend eine Stunde lang in einem vorgewärmten Kammerofen bei 850 °C an der Luft getempert. Nach dem Abkühlen wird das erhaltene Ferrit/NaCl-Gemenge unter Rühren in kaltes Wasser gegeben, wobei sich der NaCl-Anteil des Gemenges auflöst. Anschließend wird der braune Ferrit abfiltriert, ausgewaschen und getrocknet. Das im Röntgendiagramm einphasige Präparat besteht aus Kristallplättchen mit engem Teilchengrößenspektrum und einem Plättchendurchmesser von 0,05-0,1 μm und einer spezifischen Oberfläche von 15,6 m²/g. Die Magnetwerte (in einem Magnetfeld von 800 kA/m) betragen : $H_c$ = 245 kA/m, $H_R$ = 280 kA/m, $M_r/\rho$ = 39 nTm³/g. Die Schaltfeldverteilung $h_{25}$ = 0,39.

Beispiel 8

Es wird eine Lösung, bestehend aus 244,3 g $BaCl_2 \cdot 2H_2O$, 136,3 g $ZnCl_2$ und 2 703,0 g $FeCl_3 \cdot 6H_2O$ in 5 l Wasser hergestellt und unter Rühren in eine Lösung von 2 013,8 g $Na_2CO_3$ in 7 l $H_2O$ gegeben. Anschließend werden tropfenweise unter weiterem Rühren 190,6 g $TiCl_4$ zugegeben. Der pH-Wert der erhaltenen Suspension beträgt 5,1. Anschließend wird die Mischfällung durch Zugabe von 10 %iger $Na_2CO_3$-Lösung auf einen pH-Wert von 5,8 eingestellt. Danach wird die erhaltene Suspension sprühgetrocknet. Das sprühgetrocknete Pulver wird anschließend eine Stunde lang in einem vorgewärmten Kammerofen bei 890 °C an der Luft getempert. Nach dem Abkühlen wird das erhaltene Ferrit/NaCl-Gemenge unter Rühren in kaltes Wasser gegeben, wobei sich der NaCl-Anteil des Gemenges auflöst. Anschließend wird der braune Ferrit abfiltriert, ausgewaschen und getrocknet. Das im Röntgendiagramm einphasige Präparat besteht aus Kristallplättchen mit engem Teilchengrößenspektrum und einem Plättchendurchmesser von 0,05-0,1 μm und einer spezifischen Oberfläche von 12,1 m²/g. Die Magnetwerte (in einem Magnetfeld von 800 kA/m) betragen : $H_c$ = 143 kA/m, $H_R$ = 183 kA/m, $M_r/\rho$ = 33 nTm³/g. Die Schaltfeldverteilung $h_{25}$ = 0,41.

Beispiel 9

Es wird eine Lösung, bestehend aus 244,3 g $BaCl_2 \cdot 2H_2O$, 204,4 g $ZnCl_2$ und 2 432,7 g $FeCl_3 \cdot 6H_2O$ in 5 l Wasser hergestellt und unter Rühren in eine Lösung von 2 013,9 g $Na_2CO_3$ in 7 l $H_2O$ gegeben. Anschließend werden tropfenweise unter weiterem Rühren 285,9 g $TiCl_4$ zugegeben. Der pH-Wert der erhaltenen Suspension beträgt 5,6. Danach wird die Suspension sprühgetrocknet. Das sprühgetrocknete Pulver wird anschließend eine Stunde lang in einem vorgewärmten Kammerofen bei 900 °C an der Luft getempert. Nach dem Abkühlen wird das erhaltene Ferrit/NaCl-Gemenge unter Rühren in kaltes Wasser gegeben, wobei sich der NaCl-Anteil des Gemenges auflöst. Anschließend wird der braune Ferrit abfiltriert, ausgewaschen und getrocknet. Das im Röntgendiagramm einphasige Präparat besteht aus Kristallplättchen mit engem Teilchengrößenspektrum und einem Plättchendurchmesser von 0,05-0,15 μm und einer spezifischen Oberfläche von 10,1 m²/g. Die Magnetwerte (in einem Magnetfeld von 800 kA/m) betragen : $H_c$ = 86 kA/m, $H_R$ = 105 kA/m, $M_r/\rho$ = 21 nTm³/g. Die Schaltfeldverteilung $h_{25}$ = 0,44.

Beispiel 10

Es wird eine Lösung, bestehend aus 760,3 g $BaCl_2 \cdot 2H_2O$, 538,6 g $CoCl_2 \cdot 6H_2O$ und 7 954,3 g $FeCl_3 \cdot 6H_2O$ in 14 l Wasser hergestellt und unter Rühren in eine Lösung von 5 728,3 g $Na_2CO_3$ in 13 l $H_2O$ gegeben. Anschließend werden tropfenweise unter weiterem Rühren 431,6 g $TiCl_4$ zugegeben. Der pH-Wert der erhaltenen Suspension beträgt 5,0.

Anschließend wird die Mischfällung durch Zugabe von 10 %iger $Na_2CO_3$-Lösung auf einen pH-Wert von 6,0 eingestellt, wozu etwa 2,0 l nötig sind. Danach wird die erhaltene Suspension sprühgetrocknet. Das sprühgetrocknete Pulver wird anschließend eine Stunde lang in einem vorgewärmten Kammerofen

bei 900 °C an der Luft getempert. Nach dem Abkühlen wird das erhaltene Ferrit/NaCl-Gemenge unter Rühren in kaltes Wasser gegeben, wobei sich der NaCl-Anteil des Gemenges auflöst. Anschließend wird der erhaltene Ferrit abfiltriert, ausgewaschen und getrocknet. Das im Röntgendiagramm einphasige Präparat besteht aus Kristallplättchen mit engem Teilchengrößenspektrum und einem Plättchendurchmesser von 0,05-0,15 µm und einer spezifischen Oberfläche von 12,2 $m^2/g$. Die Magnetwerte (in einem Magnetfeld von 800 kA/m) betragen : $H_c$ = 66 kA/m, $H_R$ = 87 kA/m, $M_r/\rho$ = 33 $nTm^3/g$. Die Schaltfeldverteilung $h_{25}$ = 0,66.

## Beispiel 11

Es wird eine Lösung, bestehend aus 244,3 g $BaCl_2 \cdot 2H_2O$, 237,9 g $CoCl_2 \cdot 6H_2O$ und 2 703,0 g $FeCl_3 \cdot 6H_2O$ in 5 l Wasser hergestellt und unter Rühren in eine Lösung von 2 013,8 g $Na_2CO_3$ in 7 l $H_2O$ gegeben. Anschließend werden tropfenweise unter weiterem Rühren 190,6 g $TiCl_4$ zugegeben. Der pH-Wert der erhaltenen Suspension beträgt 5,8. Danach wird die Suspension sprühgetrocknet. Das sprühgetrocknete Pulver wird anschließend eine Stunde lang in einem vorgewärmten Kammerofen bei 900 °C and der Luft getempert. Nach dem Abkühlen wird das erhaltene Ferrit/NaCl-Gemenge unter Rühren in kaltes Wasser gegeben, wobei sich der NaCl-Anteil des Gemenges auflöst. Anschließend wird der erhaltene Ferrit abfiltriert, ausgewaschen und getrocknet. Das im Röntgendiagramm einphasige Präparat besteht aus Kristallplättchen mit engem Teilchengrößenspektrum und einem Plättchendurchmesser von 0,05-0,15 µm und einer spezifischen Oberfläche von 11,0 $m^2/g$. Die Magnetwerte (in einem Magnetfeld von 800 kA/m) betragen : $H_c$ = 32,8 kA/m, $H_R$ = 47 kA/m, $M_r/\rho$ = 29 $nTm^3/g$. Die Schaltfeldverteilung $h_{25}$ = 0,71.

## Beispiel 12

400 Teile eines gemäß Beispiel 5 hergestellten Bariumferritpulvers mit $H_c$ = 450 kA/m werden mit 100 Teilen einer 20 %iger Lösung eines Copolymerisats aus 80 % Vinylchlorid, 10 % Dimethylmaleinat und 10 % Diethylmaleinat in einem Gemisch aus gleichen Teilen Tetrahydrofuran und Dioxan, 103 Teilen einer 13 %igen Lösung eines thermoplastischen Polyesterurethans aus Adipinsäure, 1,4-Butandiol und 4,4'-Diisocyanatodiphenylmethan in einem Gemisch aus gleichen Teilen Tetrahydrofuran und Dioxan, 24 Teilen eines handelsüblichen anionenaktiven Netzmittels auf Basis Phosphorsäure-ester und 231 Teilen des genannten Lösungsmittelgemisches gemischt und 6 Stunden lang in einer Schüttelkugelmühle mit Hilfe von Stahlkugeln mit einem Durchmesser von 2 mm dispergiert. Danach wird mit 199 Teilen der oben erwähnten 13 %igen Lösung eines thermoplastischen Polyesterurethans aus Adipinsäure, 1,4-Butandiol und 4,4'-Diisocyanatodiphenylmethan in einem Gemisch aus gleichen Teilen Tetrahydrofuran und Dioxan, 35 Teilen des genannten Lösungsmittelgemisches, 0,3 Teilen Stearinsäure, 0,3 Teilen eins handelsüblichen Silikonöls und 0,6 Teilen Hydrochinon versetzt und weitere 2 Stunden dispergiert. Danach wird die Dispersion filtriert und in bekannter Weise auf eine 6 µm dicke Polyethylenterephthalatfolie in einer solchen Stärke aufgetragen, daß nach dem Ausrichten der plättchenförmigen Teilchen durch Vorbeiführen an einem Magnetfeld und anschließendem Trocknen und Kalandrieren eine Magnetschicht mit einer Schichtdicke von 5,4 µm verbleibt.

Am Magnetband wurden folgende Werte gemessen : $H_c$ = 465 kA/m, $M_r$ = 128 mT, $M_s$ = 194 mT, Richtfaktor = 1,2, $h_{25}$ = 0,16.

## Beispiel 13

Das in Beispiel 7 dargestellte dotierte Bariumferritpulver mit $H_c$ = 245 kA/m wird analog Beispiel 12 zu einem Magnetband verarbeitet.

Am Magnetband wurden folgende Werte gemessen : $H_c$ = 255 kA/n, $H_R$ = 278 kA/m, $M_r$ = 121 mT, $M_s$ = 189 mT, Richtfaktor = 1,3, $h_{25}$ = 0,28, Schichtdicke = 5,6 µm.

## Beispiel 14

Das in Beispiel 8 dargestellte dotierte Bariumferritpulver mit $H_c$ = 143 kA/m wird analog Beispiel 12 zu einem Magnetband verarbeitet, wobei allerdings statt 400 Teilen Ferrit 470 Teile eingesetzt wurden.

Am Magnetband wurden folgende Werte gemessen : $H_c$ = 150 kA/m, $H_R$ = 160 kA/m, $M_r$ = 116 mT, $M_s$ = 181 mT, Richtfaktor = 1,4, $h_{25}$ = 0,26, Schichtdicke = 5,2 µm.

## Beispiel 15

Das in Beispiel 11 hergestellte dotierte Bariumferritpulver mit 32,8 kA/m wird analog Beispiel 12 zu einem Magnetband verarbeitet, wobei allerdings statt 400 Teilen Ferrit 470 Teile eingesetzt wurden.

Am Magnetband wurden folgende Werte gemessen : $H_c$ = 48,7 kA/m, $H_R$ = 55 kA/m, $M_r$ = 106 mT, $M_s$ = 177 mT, Richtfaktor = 1,4, $h_{25}$ = 0,35, Schichtdicke = 4,8 µm.

**Patentansprüche**

1. Verfahren zur Herstellung isotroper Ferritpulver mit Spinellstruktur der allgemeinen Formel $MeFe_2O_4$(I), in der Me = aMn + bNi + cZn + dCo + eFe(II), bedeutet, wobei die Atommassenverhältnisse, a, b, c, d und e jeweils 0 bis 1 betragen und ihre Summe gleich 1 ist, dadurch gekennzeichnet, daß eine wäßrige Lösung oder Suspension eines oder mehrerer der Me-Salze und eine wäßrige Eisen(III)-Chloridlösung mit einer wäßrigen Lösung von Natriumcarbonat und/oder Kaliumcarbonat umgesetzt, die resultierende Mischung, bestehend aus schwerlöslichem $MeCO_3$ und Eisen(III)-Carbonat in einer Lösung von Natriumchlorid und/oder Kaliumchlorid zur Trockene gebracht wird, das trockene Salzgemenge anschließend auf eine Temperatur oberhalb des Schmelzpunktes von Natriumchlorid und/oder Kaliumchlorid jedoch auf nicht mehr als 1 200 °C erhitzt und der sich dabei bildende oktaederförmige Ferrit der Zusammensetzung $MeFe_2O_4$ durch Auslaugen mit Wasser isoliert wird.

2. Verfahren zur Herstellung von hexagonalen $Me_2Y$-Ferriten der allgemeinen Formel $M^1{}_2Me^2{}_2Fe_{12}O_{22}$(II), in der $M^1$ Barium, Strontium, Calcium und/oder Blei und $Me^1$ zweiwertiges Mangan, Kupfer, Eisen, Kobalt, Nickel, Zink, Magnesium und/oder äquimolare Mengen von Lithium und dreiwertigem Eisen bedeuten, dadurch gekennzeichnet, daß eine wäßrige Lösung oder Suspension eines $M^1$-Salzes, eine wäßrige Lösung oder Suspension eines $Me^1$-Salzes und eine wäßrige Lösung eines Eisen(III)-Salzes mit einer wäßrigen Natriumcarbonat-Lösung umgesetzt, die resultierende Mischung bestehend aus schwerlöslichem $M^1$-Salz, $Me^1$-Salz und Eisen(III)-Carbonat in einer Natriumsalzlösung zur Trocknung gebracht, das trockene Salzgemenge anschließend auf eine Temperatur zwischen 800 °C und 1 050 °C erhitzt und der sich dabei bildende plättchenförmige $Me^1{}_2Y$-Ferrit dann aus dem $Me^1{}_2Y$-Ferrit/Natriumsalzgemenge durch Auslaugen mit Wasser isoliert wird.

3. Verfahren zur Herstellung feinteiliger hexagonaler Ferrite der allgemeinen Formel $M^2(Me^2Ti)_x$-$Fe_{12-2x}O_{19}$(III), in der $M^2$ Barium oder Strontium, $Me^2$ Zink, Nickel und/oder Kobalt und x Werte von 0 bis 1,5 bedeuten, dadurch gekennzeichnet, daß eine wäßrige Barium- oder Strontiumchlorid-Lösung und eine wäßrige Eisen(III)-chlorid-Lösung sowie gegebenenfalls eine wäßrige $Me^2$-chlorid-Lösung unter Zugabe von gegebenenfalls Titantetrachlorid mit einer wäßrigen Natriumcarbonatlösung umgesetzt, die resultierende Mischung aus schwerlöslichen Fällungsprodukten in einer Natriumchloridlösung zur Trockene gebracht, das trockene Salzgemenge anschließend auf eine Temperatur oberhalb des Schmelzpunktes des Natriumchlorids jedoch auf nicht mehr als 950 °C erhitzt und dann der sich dabei bildende feinteilige plättchenförmige hexagonale Ferrit der genannten Zusammensetzung durch Auslaugen mit Wasser isoliert wird.

**Claims**

1. A process for the preparation of an isotropic ferrite powder having the structure of a spinel, of the general formula $MeFe_2O_4$(I), where Me = aMn + bNi + cZn + dCo + eFe(II), and the atomic weight ratios a, b, c, d and e are each from 0 to 1 and their sum is 1, wherein an aqueous solution or suspension of one or more of the Me salts and an aqueous iron(III) chloride solution are reacted with an aqueous solution of sodium carbonate and/or potassium carbonate, the resulting mixture, consisting of sparingly soluble $MeCO_3$ and iron(III) carbonate in a solution of sodium chloride and/or potassium chloride, is brought to dryness, the dry salt mixture is then heated at above the melting point of sodium chloride and/or potassium chloride but not above 1 200 °C, and the resulting ferrite of the composition $MeFe_2O_4$, which has octahedral particles, is isolated by leaching with water.

2. A process for the preparation of a hexagonal $Me_2Y$ ferrite of the general formula $M^1{}_2Me^2{}_2Fe_{12}O_{22}$(II), where $M^1$ is barium, strontium, calcium and/or lead and $Me^1$ is divalent manganese, copper, iron, cobalt, nickel, zinc, magnesium and/or equimolar amounts of lithium and trivalent iron, wherein an aqueous solution or suspension of an $M^1$ salt, an aqueous solution or suspension of an $Me^1$ salt and an aqueous solution of an iron (III) salt are reacted with an aqueous sodium carbonate solution, the resulting mixture, consisting of sparingly soluble $M^1$ salt, $Me^1$ salt and iron (III) carbonate in a sodium salt solution, is brought to dryness, the dry salt mixture is then heated at from 800 to 1 050 °C, and the resulting flaky $Me^1{}_2Y$ ferrite is then isolated from the $M^1{}_2Y$ ferrite/sodium salt mixture by leaching with water.

3. A process for the preparation of a finely divided hexagonal ferrite of the formula $M^2(Me^2Ti)_x$-$Fe_{12-2x}O_{19}$(III), where $M^2$ is barium or strontium, $Me^2$ is zinc, nickel, and/or cobalt and x is from 0 to 1.5, wherein an aqueous barium chloride or strontium chloride solution and an aqueous iron(III) chloride solution, with or without an aqueous $Me^2$ chloride solution, and with or without the addition of titanium tetachloride, are reacted with an aqueous sodium carbonate solution, the resulting mixture, consisting of sparingly soluble precipitates in a sodium chloride solution, is brought to dryness, the dry salt mixture is then heated to above the melting point of the sodium chloride but not above 950 °C, and the resulting finely divided flaky hexagonal ferrite of the said composition is then isolated by leaching with water.

**Revendications**

1. Procédé de préparation de poudre de ferrite isotrope à structure type spinelle, de formule générale

$MeFe_2O_4$(I), dans laquelle Me = aMn + bNi + cZn + dCo + eFe(II) les rapports de masses atomiques a, b, c, d, et e valant respectivement 0 à 1 et leur somme étant égale à 1, caractérisé par le fait que l'on fait réagir une solution ou suspension aqueuse d'un ou plusieurs des sels de Me et une solution aqueuse de chlorure de fer (III) avec une solution aqueuse de carbonate de sodium et/ou carbonate de potassium, on met à sec le mélange résultant, constitué de $MeCo_3$ et de carbonate de fer(III), peu solubles dans une solution de chlorure de sodium et/ou chlorure de potassium, on porte ensuite le mélange de sels sec à une température supérieure au point de fusion du chlorure de sodium et/ou chlorure de potassium, mais toutefois pas supérieure à 1 200 °C et, par lessivage à l'eau, on isole le ferrite octaédrique qui s'est formé, de composition $MeFe_2O_4$.

2. Procédé de préparation de ferrites $Me_2Y$ hexagonaux de formule générale $M^1{}_2Me^2{}_2Fe_{12}O_{22}$(II), dans laquelle $M^1$ représente baryum, strontium, calcium et/ou plomb et $Me^1$ représente manganèse bivalent, zinc, magnésium et/ou des quantités équimolaires de lithium et fer trivalent, caractérisé par le fait que l'on fait réagir une solution ou suspension aqueuse d'un sel de $M^1$, une solution ou suspension aqueuse d'un sel de $Me^1$ et une solution aqueuse d'un sel de fer(III) avec une solution aqueuse de carbonate de sodium, on met à sec le mélange résultant, constitué de sel de $M^1$, sel de $Me^1$ et carbonate de fer(III) peu solubles, dans une solution de sel de sodium, on porte ensuite le mélange de sels sec à une température comprise entre 800 °C et 1 050 °C et on isole alors, par lessivage à l'eau, le ferrite $Me^1{}_2Y$, sous forme de plaquettes, qui s'est formé, du mélange de ferrite $Me^1{}_2Y$/sel de sodium.

3. Procédé de préparation de ferrites hexagonaux finement divisés de formule générale $M^2(Me^2Ti)_x$-$Fe_{12-2x}O_{19}$(III) dans laquelle $M^2$ représente baryum ou strontium, $Me^2$ représente zinc, nickel et/ou cobalt et x une valeur de 0 à 1,5, caractérisé par le fait que l'on fait réagir une solution aqueuse de chlorure de baryum ou strontium et une solution aqueuse de chlorure de fer(III), ainsi qu'éventuellement une solution aqueuse de chlorure de $Me^2$, sous addition éventuelle de tétrachlorure de titane, avec une solution aqueuse de carbonate de sodium, on met à sec le mélange résultant de produits de précipitation peu solubles dans une solution de chlorure de sodium, on porte ensuite le mélange de sels sec à une température supérieure au point de fusion du chlorure de sodium, mais toutefois pas supérieure à 950 °C, et on isole alors, par lessivage à l'eau, le ferrite hexagonal, en plaquettes, finement divisé, qui s'est formé, de la composition indiquée.